(19) Europäisches Patentamt
European Patent Office
Office européen des brevets

(11) Publication number: **0 010 838**
**A1**

(12) **EUROPEAN PATENT APPLICATION**

(21) Application number: **79301685.8**

(22) Date of filing: **17.08.79**

(51) Int. Cl.³: **C 08 G 18/32,** C 08 G 18/76, C 08 G 18/10

(30) Priority: **12.10.78 US 950900**

(43) Date of publication of application: **14.05.80 Bulletin 80/10**

(84) Designated Contracting States: **AT BE CH DE FR GB IT LU NL SE**

(71) Applicant: **AMERICAN CYANAMID COMPANY, Berdan Avenue, Wayne New Jersey 06904 (US)**

(72) Inventor: **Harvey, Sidney R., River Road, R.D.1, Belle Mead, New Jersey (US)**

(74) Representative: **Allam, Peter Clerk et al, TREGEAR, THIEMANN & BLEACH Enterprise House Isambard Brunel Road, Portsmouth, Hants PO1 2AN (GB)**

(54) **Polyurethane elastomers cured with 1,2-bis(2-aminophenylthio)ethane and a method for their preparation.**

(57) Polyurethane elastomers are cured with 1,2-bis-(2-aminophenylthio)ethane. The polyurethane prepolymer employed is one which has been prepared using tolylene diisocyanate as the sole isocyanate and, prior to reaction with the diamine curing agent, the content of unreacted uncombined monmeric tolylene diisocyanate in the prepolymer is adjusted to be within the range 0.7 to 3.0% by weight. The cured product exhibits improved mechanical properties.

EP 0 010 838 A1

TITLE MODIFIED
see front page

# POLYURETHANE ELASTOMERS CURED WITH 1,2-BIS-(2-AMINOPHENYLTHIO)ETHANE

## FIELD OF THE INVENTION

The present invention relates to improved polyurethane elastomers in general and, in particular, to polyurethane elastomers exhibiting improved mechanical properties when cured with 1,2-bis(2-aminophenylthio)ethane.

## BACKGROUND OF THE INVENTION

For many years it has generally been recognized in the polyurethane art that aromatic diamines, particularly aromatic o-substituted diamines, provide the best overall mechanical properties when used as curatives for isocyanate-terminated polyurethane prepolymers. The most widely used aromatic diamine curative has been 4,4'-methylenebis(2-chloroaniline), known in the art as MOCA. Physical properties of MOCA-cured polyurethane elastomers are quite good. However, the use of MOCA has had its attendant problems, most noteably its high melting point, which requires the user to exercise considerable care to obtain uniform mixes with the polymer. Furthermore, because the high melting point requires high mix temperatures, a shortened working life (pot life, gel time) of the mixture results. Nevertheless, in spite of its shortcomings, MOCA has enjoyed predominance as the best overall polyurethane curative while the search has continued for an effective aromatic diamine curative with a lower melting point and high reactivity. This search has been spurred recently by the implication of MOCA as a suspected carcinogen.

Hirosawa, U. S. Patent 3,920,617, discloses a method for curing polyurethane prepolymers with a new class

of diamine curatives represented by the formula:

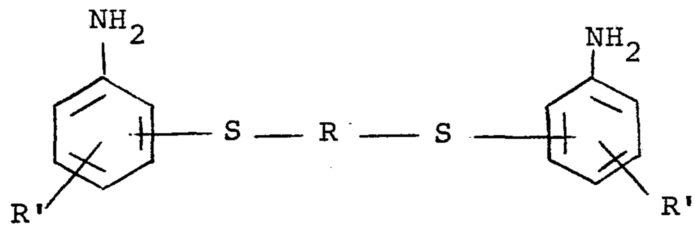

wherein R, among other things, is alkylene. One compound among the above class, namely, 1,2-bis(2-aminophenylthio)-ethane, hereinafter sometimes called BATE, has been found to be a particularly suitable, low melting (73-78°C.), nontoxic diamine curative with reactivity similar to MOCA. Although mix temperatures are significantly lower, comparable cures with BATE versus MOCA, however, generally give poorer overall mechanical properties, particularly in hardness and compression set properties.

Athey, in an article published in Jour. Ind. Eng. Chem., Vol 52, No. 7, July, 1960, pp. 611-612, discloses that the addition of small amounts of 2,4-tolylene diisocyanate to polyurethane polymers before vulcanization with MOCA increases hardness, modulus and resistance to compression set.

## SUMMARY OF THE INVENTION

The present invention is based on the discovery that 1,2-bis(2-aminophenylthio)ethane provides excellent mechanical properties, including improved hardness and compression set properties, when the polyurethane prepolymer which it is used to cure is prepared from tolylene diisocyanate as the sole isocyanate and it contains from about 0.7 to 3.0 percent, by weight, of free, uncombined, monomeric 2,6-tolylene diisocyanate or mixtures thereof with 2,4-tolylene diisocyanate.

Polyurethane prepolymers containing less than about 0.6 percent by weight of free, uncombined (un-reacted), monomeric tolylene diisocyanate, when cured with 1,2-bis(2-aminophenylthio)ethane, exhibit mechanical properties significantly poorer than comparable MOCA-cured elastomers, particularly in hardness and compression set. However, when monomeric tolylene diisocyanate is added to the prepolymer prior to mixing with 1,2-bis(2-aminophenylthio)ethane, the

resulting cured elastomers exhibit mechanical properties equal to or better than comparable MOCA-cured elastomers.

These results are surprising and unexpected. Addition of monomeric tolylene diisocyanate to polyurethane prepolymers, in accordance with the present invention, permits the preparation of elastomers having a broad range of commercially useful mechanical properties using, as the curative, 1,2-bis(2-aminophenylthio)ethane, whereas elastomers prepared without the addition of tolylene diisocyanate are deficient in one or more commercially important properties.

## DESCRIPTION OF THE INVENTION

Polyurethane technology is very well developed and widely practiced. Polyurethane prepolymers, that is, isocyanate terminated polyurethane intermediates, are readily available commercially. They are prepared by the reaction of a polyol with a stoichiometric excess of an organic diisocyanate. Suitable polyols include polyester polyols, such as polyethyleneadipate, polypropyleneadipate, polybutyleneadipate, and the like, and mixtures thereof; polyether polyols, such as polytetramethylene ether glycol, polypropylene ether glycol, and the like; and polythioether polyols, such as polythiodiethanol, and the like.

Although many diisocyanates have been used in the preparation of polyurethane prepolymers, including tolylene diisocyanate, methylenebis(phenyl isocyanate), known as MDI, and m-phenylene diisocyanate, for the purposes of the present invention, the prepolymers with which the invention is concerned are those prepared from tolylene diisocyanate (2,4- or 2,6- or isomeric mixtures thereof). In general, the ratio of isocyanate groups to hydroxyl groups used in making prepolymers may range from greater than 1/1 to 3/1 or higher. For practical purposes, however, prepolymers are prepared having an isocyanate to hydroxyl ratio of from about 1.5/1 to about 2/1. Depending on the molecular weight of the polyol, the total combined and uncombined isocyanate content (% NCO) of the prepolymers will generally range from about 2.0% to about 8.0%. Polymer hardness increases with increasing isocyanate content. These prepolymers are described in detail

in Saunders and Frisch, Polyurethanes:- Chemistry and Technology, Interscience Publishers, N. Y., N. Y., 1962; Polyurethane Technology, P. F. Bruins, Ed., Interscience Publishers, N. Y., N. Y., 1969; and K. F. Pigott, "Polyurethanes," Encyclopedia of Poly. Sci. and Tech., Vol. 11, p. 503-563, John Wiley and Sons, Inc., N. Y., N. Y., 1969.

In accordance with the present invention, a polyurethane prepolymer, prepared using tolylene diisocyanate, and generally having a total combined and uncombined isocyanate content ranging from about 2.0 to 8.0 percent, and having less than about 0.7 percent by weight, of free, uncombined, monomeric tolylene diisocyanate, is blended with monomeric 2,6-tolylene diisocyanate or isomeric mixtures thereof with 2,4-tolylene diisocyanate. When mixtures of the 2,6- and 2,4- isomers are used, the amount of the 2,6-isomer should constitute at least 20%, by weight, based on the total weight of the isocyanate mixture. The amount of 2,6-tolylene diisocyanate, added to the prepolymer should provide, in the prepolymer, before curing, from about 0.7 to 3.0 percent, by weight, of free, uncombined, monomeric tolylene diisocyanate. The amount of tolylene diisocyanate added will vary depending on the isocyanate content of the prepolymer, the amount in general increasing as the isocyanate content of the prepolymer increases.

The invention is preferably applied to polyurethane prepolymers in which the free, uncombined monomeric isocyanate content is less than about 0.7 percent, still more preferably, less than about 0.5 percent by weight.

The invention is more completely illustrated by the following examples. In the examples, the polyethyleneadipate polyurethane prepolymers which are used are the reaction products of polyethyleneadipate, having molecular weights ranging from about 500 to about 3500, with tolylene diisocyanate (80/20- 2,4-/2,6-isomer mixture) using an NCO/OH ratio of 2.2/1. The prepolymers, after production, are stripped using a rotary vacuum stripper to remove most of the excess uncombined tolylene diisocyanate remaining therein. The stripped prepolymers are then cured with from about 80 to

about 100 percent of the stoichiometrically required amount, based on the total amount of combined and uncombined isocyanate, of 1,2-bis(2-aminophenylthio)ethane, at a temperature of 80°C., preferably 85-90°C. The mixtures are compression molded for about one hour at the above temperatures and then post-cured in an oven at the same temperatures, for about 16 hours.

The amount of free, uncombined monomeric tolylene diisocyanate in the prepolymers is determined by the method described in ASTM D2615-70.

Example 1 (Comparative)

A polyurethane prepolymer is prepared by reacting polyethylene adipate (molecular weight 2100) with tolylene diisocyanate (TDI) (80% 2,4-/20% 2,6) at an NCO/OH ratio of 2.2/1. The resulting prepolymer is stripped in vacuo to remove untreated TDI. The total combined and uncombined isocyanate content of the prepolymer is 3.1% and the monomeric uncombined TDI content is 0.24%. A portion of the polymer is mixed at 100°C. with 85% of the stoichiometric amount of 1,2-bis(2-aminophenylthio)ethane and cured by compression molding for one hour at 100°C., followed by post-curing at 100°C. for 16 hours. Physical properties obtained are as follows:

| | |
|---|---|
| % TDI (monomeric) | 0.24 |
| Pot life, mins. | 5 |
| Gel life, mins. | 25 |
| Hardness, Shore A (ASTM D676) | |
| Cold (room temp.) | 70 |
| Hot (100°C.) | 60 |
| Modulus, psi @ (ASTM D412) | |
| 100% | 304 |
| 300% | 507 |
| Tensile strength, psi (ASTM D412) | 5691 |
| Elongation, % (ASTM D412) | 637 |
| Compression Set, % (ASTM D575)-Method B | 56 |

Examples 2 & 3

Two portions of the stripped prepolymer of Example 1 are mixed with a monomeric mixture of 2,6- and 2,4- TDI

(70/30) to bring the level of free, uncombined TDI to (2) 0.75% and (3) 1.0% and the prepolymers are then cured in the same manner. Physical properties are given below:

| | Example 2 | Example 3 |
|---|---|---|
| % TDI | 0.75 | 1.0 |
| Pot life, mins. | 3 | 3 |
| Gel time, mins. | 16 | 5 |
| Hardness, Shore A | | |
| Cold | 75 | 76 |
| Hot | 76 | 76 |
| Modulus, psi, @ | | |
| 100% | 391 | 418 |
| 300% | 745 | 756 |
| Tensile, psi | 6103 | 5512 |
| Elongation, % | 632 | 644 |
| Compression Set, %- Method B | 30.5 | 24.4 |

The results of Examples 1-3 illustrate that cures with 1,2-bis(2-aminophenylthio)ethane give improved physical properties when free TDI is present in the prepolymer. Hot and cold hardness are improved and the compression set is significantly reduced.

Example 4

When the procedure of Example 2 is again followed except that the prepolymer is prepared from polytetramethylene ether glycol of 3500 m.w. instead of polyethylene adipate, similar curing is achieved.

Example 5

The procedure of Example 3 is again followed except that the polyethylene adipate is replaced by polythiodiethanol (m.w. 2300). Similar results are observed.

Example 6

Example 3 is again followed in all essential details except that the amount of monomeric TDI added is 3.0%. Again an effective cure is accomplished with good hot and cold hardness and reduced compression set.

Examples 7 - 10

The procedure of Example 2 is again followed except that the stripped prepolymer contains 0.19% monomeric, uncombined TDI. The prepolymer was admixed with sufficient monomeric 2,6-tolylene diisocyanate, 2,4-tolylene diisocyanate or mixtures of 2,6- and 2,4-tolylene diisocyanate to provide a total -NCO content of 3.17%. The monomeric, uncombined TDI was 1.01%. The curative was mixed with the resultant prepolymer at 90°C. and cured in a mold at 90°C.

As above, the pot life is the time following mixing before the mixture reaches a viscosity too high to permit pouring into a mold; gel time is the time at which the mixture attains a firm, non-tacky feel to the touch. Demold time is the time at which the elastomer can be removed from the mold without breaking, cracking or deforming. Data is set forth in the table below.

TABLE

| Example | 7 | 8 | 9 | 10* |
|---|---|---|---|---|
| Added TDI | | | | |
| % 2,6-isomer | 100 | 70 | 20 | 0 |
| % 2,4-isomer | 0 | 30 | 80 | 100 |
| Pot life, min. | 6.5 | 6 | 6 | 6 |
| Gel time, min. | 12.5 | 33 | 36 | 36 |
| Demold time, min. | 45 | 60 | 120 | 150 |

* = comparative

Properties: Post-cured 16 hours @ 90°C. + conditioned one week at room temperature.

| | 7 | 8 | 9 | 10* |
|---|---|---|---|---|
| Hardness, Shore A | 79 | 78 | 75 | 60 |
| Modulus, psi | | | | |
| @ 100% elongation | 410 | 365 | 325 | 245 |
| @ 200% | 530 | 465 | 420 | 325 |
| @ 300% | 700 | 595 | 535 | 385 |

| | | | | |
|---|---|---|---|---|
| Tensile, psi | 5640 | 5740 | 5600 | 4945 |
| Elongation, % | 660 | 700 | 685 | 710 |
| Split Tear, pli | 165 | 175 | 160 | 120 |
| Compression Set, % | 34 | 46 | 50 | 51 |
| (Method B) | | | | |
| Compression Modulus, psi | | | | |
| @ 5% deflection | 95 | 85 | 80 | 65 |
| @ 10% | 165 | 145 | 140 | 115 |
| @ 25% | 450 | 395 | 385 | 305 |

It can be seen that there is a general trend, in proceeding from 100% 2,4-TDI to 100% 2,6-TDI, toward improved properties. Thus, gel time and demold time are significantly reduced while still maintaining adequate pot life (working time). Hardness is higher, modulus is increased, compression set is reduced, and compression modulus is increased. Demold time, hardness, and modulus improvements are considered important.

CLAIMS:

1. A polyurethane composition comprising the product of reaction of (1) an isocyanate-terminated polyurethane prepolymer prepared using a tolylene diisocyanate as the sole isocyanate and containing from about 0.7 to 3.0 percent by weight of unreacted, uncombined monomeric 2,6-tolylene diisocyanate or a mixture of 2,6- and 2,4-tolylene diisocyanate and (2) from about 80 to 100%, based on the total equivalents of combined and uncombined isocyanate groups in said prepolymer, of the stoichiometrically required amount of 1,2-bis(2-aminophenylthio)ethane; said prepolymer being the product of reaction of (A) a polyol, selected from polyesters, polyethers, and polythioethers, having a molecular weight in the range of from about 500 to 3500, and (B) a stoichiometric excess of 2,4- or 2,6-tolylene diisocyanate, or an isomeric mixture thereof.

2. A composition according to Claim 1 wherein the prepolymer is polyester based.

3. A composition according to Claim 1 wherein the prepolymer is polyether based.

4. A composition according to Claim 1 wherein the prepolymer is polythioether based.

5. A composition according to any preceding Claim, wherein said unreacted diisocyanate is an isomeric mixture of 2,4- and 2,6- tolylene diisocyanate containing at least 20% by weight of the 2,6- isomer.

6. A method for the preparation of polyurethane elastomers which comprises adding to an isocyanate-terminated polyurethane prepolymer prepared using

tolylene diisocyanate as the sole isocyanate, and containing less than 0.7 percent by weight of monomeric tolylene diisocyanate, sufficient monomeric 2,6-tolylene diisocyanate or a mixture of 2,6- and 2,4-tolylene diisocyanate to provide in said prepolymer from about 0.7 to 3.0 percent by weight of monomeric, uncombined tolylene diisocyanate, and reacting the resultant polyurethane prepolymer with from 80.0 to 100.0%, based on the total equivalents of combined and uncombined isocyanate groups present therein, of the stiochiometrically required amount of 1,2-bis(2-aminophenylthio)-ethane.

7. A method according to Claim 6, wherein the prepolymer is polyester based.

8. A method according to Claim 6, wherein the prepolymer is polyether based.

9. A method according to Claim 6, wherein the prepolymer is polythioether based.

10. A method according to any one of Claims 6 - 9, wherein the added diisocyanate is an isomeric mixture of 2,4- and 2,6- tolylene diisocyanate containing at least 20% by weight of the 2,6- isomer.

TREGEAR, THIEMANN & BLEACH,
CHARTERED PATENT AGENTS,
ENTERPRISE HOUSE,
ISAMBARD BRUNEL ROAD,
PORTSMOUTH PO1 2AN
AND
49/51, BEDFORD ROW, LONDON, WC1V 6RL

0010838

European Patent Office

# EUROPEAN SEARCH REPORT

Application number
EP 79 301 685.8

| Category | DOCUMENTS CONSIDERED TO BE RELEVANT — Citation of document with indication, where appropriate, of relevant passages | Relevant to claim | CLASSIFICATION OF THE APPLICATION (Int. Cl.3) |
|---|---|---|---|
| A | DE - A1 - 2 509 405 (BAYER)<br>* example 3; pages 11 and 12 *<br>-- | 1-4 | C 08 G 18/32<br>C 08 G 18/76<br>C 08 G 18/10 |
| A | US - A - 4 031 049 (HIROSAWA et al.)<br>* claims 20, 22, 25 *<br>-- | | |
| D | JOURNAL OF INDUSTRIAL AND ENGINEERING CHEMISTRY, Vol. 52, No. 7, July 1960<br>R.J. ATHEY "Chemical Compounding of Liquid Urethane Elastomers"<br>pages 611 and 612<br>---- | | |

TECHNICAL FIELDS SEARCHED (Int.Cl.3)

C 08 G 18/00
C 08 K 5/00
C 08 L 75/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 13-02-1980 | KRAIL |